# EUROPÄISCHE PATENTSCHRIFT

(11) **EP 1 731 749 B1**
(45) Veröffentlichungstag und Bekanntmachung des Hinweises auf die Patenterteilung: **06.08.2014**
(21) Anmeldenummer: 06115030.6
(22) Anmeldetag: 06.06.2006
(51) Int. Cl.: F02M 35/08

(54) **Staubaustragssystem**
Dust dispensing system
Système de distribution de poussière

(30) Priorität: 09.06.2005 DE 102005026811
(43) Veröffentlichungstag der Anmeldung: 13.12.2006
(73) Patentinhaber: MANN+HUMMEL GmbH, 71638 Ludwigsburg (DE)
(72) Erfinder: Greif, Volker, 67376, Harthausen (DE); Schärlund, Jukka, 76877, Offenbach (DE)

(56) Entgegenhaltungen:
- US-A- 5 632 243
- US-A1- 2002 020 295
- US-A1- 2002 189 572
- PATENT ABSTRACTS OF JAPAN Bd. 010, Nr. 073 (M-463), 22. März 1986 (1986-03-22) & JP 60 216063 A (NIPPON DENSO KK), 29. Oktober 1985 (1985-10-29)

## Beschreibung

### Technisches Gebiet

Die Erfindung betrifft eine Brennkraftmaschine mit einem Staubaustragssystem nach dem Oberbegriff des Anspruches 1.

### Stand der Technik

Die Schrift US 2002/0189572A1 beschreibt ein Lufteinlasssystem einer tragbaren Arbeitsmaschine mit einer Staubabscheidung aus der Verbrennungsluft vor einem Filterelement. Die ungereinigte Luft strömt durch einfache Öffnungen in der Außenwand ins Innere des Filtergehäuses. Die durch Schwerkraft abgeschiedenen Partikel aus der Luft sammeln sich am Boden des Filtergehäuses. Von dort werden sie durch eine Rohrleitung mittels eines Luftstromes in einem separaten Strömungskanal abgesaugt.

Dem Dokument US 2002/0020295 A1 ist eine in sich geschlossene, lüfterunterstützte Luftreinigungseinheit zu entnehmen, bei der die ungereinigte Luft mithilfe eines hinter einer Einströmöffnung angeordneten Lüfters angesaugt und in Rotation versetzt wird. Die zu reinigende Rohluft strömt am Lüfterrad vorbei und die in der Luft enthaltenen Partikel scheiden sich hinter dem Lüfterrad durch die Fliehkraft an der Innenwand des Gehäuses auf der Druckseite des Lüfterrades ab und werden über eine Öffnung am Gehäuse ausgetragen.

In der Patentschrift US5,632,243 ist ein Luftfiltersystem für eine tragbare Arbeitsmaschine offenbart, bei dem die gesamte Ansaugluft vor dem Durchströmen des Luftfilterelements durch eine Vorkammer geleitet wird, in der sich die Schmutzpartikel an Nasen abscheiden und durch Öffnungen am Kammerboden aus der Vorkammer fallen, wobei der dargestellte Lüfter der Versorgung des Motors mit Verbrennungsluft dient.

Es ist aus der US 4,514,193 ein Luftfilter bekannt, der mit einer als Vielzellenzyklon ausgebildeten Vorabscheidervorrichtung versehen ist. Der Vielzellenzyklon ist in die Wand des Filtergehäuses integriert. Somit bildet der Zyklon den Einlass für das Filtergehäuse. Die Luft erfährt bei Durchlaufen des Zyklons eine Vorreinigung. Das abgeschiedene Material erreicht somit nicht mehr den Filterraum, in dem der Filtereinsatz eingebaut ist. Das Filtergehäuse kann auch doppelwandig aufgebaut sein, so dass das vorabgeschiedene Material durch eine entsprechende Auslassöffnung in den Zyklonzellen in den durch die Wände gebildeten Innenraum gelangt. Aus diesem Bereich kann das vorabgeschiedene Material durch einen Schmutzaustrag nach außen gelangen, wobei dieser Vorgang durch eine Absaugung unterstützt werden kann. Die Vorabscheidung von Schmutzteilchen aus dem zu filternden Fluid ist jedoch nicht vollständig. Gemäß den in der US 4 514 193 beanspruchten Apparaturen trifft die mit Restpartikeln beladene Luft direkt auf den Filtereinsatz. Dies kann Be schädigungen zur Folge haben, außerdem kann durch punktuelle Beaufschlagung des Filtereinsatzes ein inhomogenes Zusetzen des Filtermediums erfolgen. Dies kann sich negativ auf die Filterkapazität während der Lebensdauer des Filtereinsatzes auswirken.

Da Zyklone in ihrer Eigenart als Vorfilter eine sehr hohe Abscheideleistung haben, muss gewährleistet sein, dass der Feststoffpartikelaustrag durch die Zyklone kontinuierlich abgeführt wird, um nicht zu einer Verstopfung des Systems zu führen. Der ausgetragene Staub- und Feststoffpartikelanteil sollte auch nicht mit dem in Strömungsrichtung folgenden Hauptfilter und/oder Sekundärfilter in Berührung kommen, da deren Standzeiten dadurch drastisch verringert würden. Bevorzugt wird hierbei die Staubaustragsöffnung am Luftfiltergehäuse mit einer Unterdruckquelle verbunden. Diese Unterdruckquelle kann beispielsweise durch ein Abgassystem gebildet werden, wo dann der Unterdruck durch ein Venturi-Prinzip erzeugt wird. Eine weitere im Stand der Technik bekannte Maßnahme ist die Absaugung über ein separat nachgeschaltetes Elektrogebläse.

Nachteilig ist hierbei der hohe Aufwand zur Erzeugung des Staubaustrages. Ein speziell für den Staubaustrag verwendetes Elektrogebläse beinhaltet einen hohen Kostenfaktor, und die Verbindung mit dem Abgassystem ist bei bestimmten Anordnungen des Luftfiltergehäuses bedingt durch die räumliche Anordnung nur sehr schwer oder gar nicht möglich.

Aufgabe der Erfindung ist es daher, ein Staubaustragssystem zu schaffen, welches einfach aufgebaut ist, kostengünstig ist und vorhandene Ressourcen nutzen kann. Diese Aufgabe wird durch die Merkmale des Anspruchs 1 gelöst. Die Unteransprüche geben zweckmäßige Weiterbildungen an.

### Offenbarung der Erfindung

Die erfindungsgemäße Brennkraftmaschine - vorzugsweise luftgekühlte Brennkraftmaschine - weist ein Luftfiltersystem und eine Lüfteranordnung auf. Das Luftfiltersystem weist wenigstens ein Filterelement, insbesondere weiterhin einen Vorabscheider auf, wobei im Gehäuse des Luftfiltersystems eine Feststoffpartikelaustragsöffnung in Strömungsrichtung vor dem letzten Filterelement angeordnet ist. Vorzugsweise ist die Feststoffpartikelaustragsöffnung zwischen einem Vorabscheider und dem Hauptfilterelement angeordnet, so dass im Vorabscheider abgeschiedene Feststoffpartikel über die Austragsöffnung aus dem Luftfiltergehäuse entfernt werden können. D. h. weiterhin, dass die Feststoffpartikelaustragsöffnung bezogen auf das letzte Filterelement immer auf der Rohseite des letztes Filterelementes angeordnet ist. Die Lüfteranordnung weist einen Halterahmen und ein darin angeordnetes Lüfterrad zur Herstellung eines Kühlluftstromes auf. Dieses kann bei luftgekühlten Brennkraftmaschine der meistens mechanisch angetriebene Lüfter zur Kühlung der Brennkraftmaschine sein, es ist jedoch auch möglich, bei flüssigkeits-gekühlten Brennkraftmaschinen einen leistungsstarken Lüfter zur Luftdurchströmung des Wasserwärmetauschers zu verwenden. Erfindungsgemäß ist die Feststoffpartikelaustragsöffnung korrespondierend mit der Saugseite des Lüfterrades der Lüfteranordnung verbunden. Der auf der Saugseite des Lüfterrades entstehende Unterdruck saugt durch eine korrespondierende Verbindung, welche beispielsweise eine Verbindungs-oder Rohrleitung darstellen kann, die im Luftfiltersystem gesammelten Feststoffpartikel durch die Feststoffpartikelaustragsöffnung aus dem Luftfiltersystem heraus. Durch die Nutzung eines schon vorhandenen Lüftersystems, welches im Bereich der Saugseite des Lüfterrades einen genügend hohen Unterdruck zur Verfügung stellen kann, ist es möglich, auf die bisher verwendeten Abgasejektoren oder eine zusätzliche elektrische Unterdruckpumpe bzw. ein Elektrogebläse zu verzichten. Dadurch wird das System kostengünstiger und auch leichter, welches der zur Verfügung stehenden Nutzlast des durch die Brennkraftmaschine angetriebenen Fahrzeuges zugute kommt. Weiterhin ist das System sehr einfach aufgebaut, so dass einzig und allein eine Verbindungsleitung zwischen Feststoffpartikelaustragsöffnung und Saugseite des Lüfterrades ausreicht. Bei entsprechender Anordnung der Unterdruckabnahme vor dem Lüfterrad ergibt sich ein minimaler bis gar kein Einfluss auf die Kühlleistung des Lüfterrades, im Gegensatz dazu würde beispielsweise bei der Verwendung von Abgasejektoren der Abgasgegendruck steigen, welches sich negativ auf die Performance der Brennkraftmaschine auswirkt. Die entsprechende Anordnung auf der Saugseite des Lüfterrades sollte möglichst isokinetisch erfolgen, so dass kein Einfluss auf die Gebläseleistung genommen wird. Die hierzu günstigste Position lässt sich entweder im Versuch oder über Rechenmethoden herausfinden.

Gemäß einer vorteilhaften Ausgestaltung der Erfindung ist die Saugseite des Lüfterrades mit einem Schutzgitter überdeckt. Dieses dient einerseits der Funktionssicherheit des Lüfterrades, dass dieses nicht durch eingebrachte Teile zerstört wird, und weiterhin der Sicherheit des Bedieners der Brennkraftmaschine, so dass vermieden wird, mit Körperextremitäten in das laufende Lüfterrad einzugreifen. Erfindungsgemäß weist das Schutzgitter einen in das Schutzgitter eingebrachten Rohrstutzen auf, welcher sich axial in Richtung des Lüfterrades erstreckt. Der Rohrstutzen kann dabei einteilig mit dem Schutzgitter im Spritzgießverfahren hergestellt sein oder aber als separates Bauteil über eine Rast-, Schnapp-, Klips-, Kleb-oder Schweißverbindung mit dem Schutzgitter verbunden werden. Je weiter sich der Rohrstutzen axial in Richtung des Lüfterrades erstreckt, desto größer ist der dort wirkende Unterdruck. Weiterhin hat der radiale Abstand des Rohrstutzens von der Mittelachse des Lüfterrades einen großen Einfluss auf den anliegenden Unterdruck am Rohrstutzen, so dass die bevorzugt beste Position radial möglichst weit am äußeren Ende des Lüfterrades und axial so nah wie möglich am Lüfterrad ist. Das andere Ende des Rohrstutzens ist daraufhin korrespondierend mit der Feststoffpartikelaustragsöffnung über beispielsweise eine Verbindungsleitung verbunden, so dass der am ersten Ende des Rohrstutzens wirkende Unterdruck direkt auf die Feststoffpartikelaustragsöffnung des Luftfiltergehäuses wirken kann. Durch die Verwendung des Rohrstutzens ergibt sich weiterhin der Vorteil einer perfekten Anschlussmöglichkeit für eine Verbindungsleitung hin zur Feststoffpartikelaustragsöffnung, wobei die Verbindungsleitung lösbar oder unlösbar unmittelbar mit dem Rohrstutzen verbunden werden kann.

Es ist weiterhin vorteilhaft, wenn der Rohrstutzen wenigstens abschnittsweise eine sich in Richtung des Lüfterrades verjüngende konische Form aufweist. Diese axial zulaufende konische Verjüngung des Rohrstutzens bewirkt eine Minimierung der negativen Einflüsse auf das Lüfterrad ohne einen nennenswerten negativen Einfluss auf die Absaugleistung Inne zu haben. D. h., dass bei Vorhandensein eines Mindestunterdruckes auf der Saugseite des Lüfterrades mittels dieser Form bei minimalem Einfluss auf die Lüfterleistung eine optimale Durchflussgeschwindigkeit der aus dem Luftfilter abgesaugten Feststoffpartikel erreicht werden kann.

Alternativ hierzu kann das Schutzgitter im Bereich der Anbindung des Verbindungselementes zwischen Schutzgitter und Feststoffpartikelaustragsöffnung eine im Wesentlichen kreisförmige oder polygonale Öffnung aufweisen, wobei die Öffnung wiederum mit der Verbindungsleitung verbunden ist. Hier ist es vorteilhaft, wenn das Schutzgitter relativ nah am Lüfterrad angeordnet ist, so dass im Bereich des Schutzgitters ein ausreichender Unterdruck zur Verfügung steht.

Eine weitere günstige Ausführungsform der Öffnung im Schutzgitter zur Anbindung an das Verbindungselement zwischen Feststoffpartikelaustragsöffnung im Luftfiltergehäuse und Lüfterrad ist eine schlitzförmige Öffnung. Dabei können die Enden des Schlitzes abgerundet sein oder auch eckige Kanten aufweisen.

Gemäß einer vorteilhaften Ausgestaltung der Erfindung ist die Feststoffpartikelaustragsöffnung über eine flexible Rohrleitung mit der Saugseite des Lüfterrades verbunden. Gerade bei beengten oder eingeschränkten Platzverhältnissen ist diese Lösung vorteilhaft, da so eine flexible Anbringung des Luftfiltergehäuses möglich ist. Weiterhin ergibt sich durch diese Lösung die Möglichkeit einer Nachrüstung dieses Systems durch das Verlegen der flexiblen Rohrleitung und den Austausch des standardmäßigen Schutzgitters durch das Lüftungsgitter mit dem Anschlussmodul an das flexible Rohr.

Alternativ hierzu ist es auch möglich, eine starre Rohrleitung mit der Saugseite des Lüfterrades zu verbinden. Bei einer vorher vorgegebenen Formgebung der Rohrleitung ist es so einfach möglich, die Feststoffpartikelaustragsöffnung mit dem Schutzgitter auf der Saugseite des Lüfterrades zu verbinden.

Es ist vorteilhaft, wenn die Feststoffpartikelaustragsöffnung in Strömungsrichtung hinter wenigstens einem Zyklonvorabscheider im Luftfiltergehäuse angeordnet ist. Der Zyklonvorabscheider ist dabei vorzugsweise als Multizyklon ausgeführt, wodurch er eine äußerst hochwertige Vorabscheidung im Bereich von größeren Feststoffpartikeln ― wie beispielsweise Staub oder Sand - bietet. Damit es im Betrieb nicht zu einer Verstopfung kommt, ist es sinnvoll, die Feststoffpartikelaustragsöffnung direkt im Anschluss an die Zykloneinheit im Gehäuse anzuordnen und die gesammelten Feststoffpartikel mittels eines Unterdruckes - hervorgerufen durch den Unterdruck auf der Saugseite des Lüftersystems - aus dem Gehäuse herauszusaugen.

Ein besonders für diese Anordnung geeigneter Lüfter ergibt sich bei luftgekühlten Motoren, da gerade hier besonders leistungsstarke Lüftersysteme verwendet werden, um für eine ausreichende Kühlung des Motors in jedem Betriebszustand zu sorgen. Dabei wird der Motor bevorzugt direkt auf der Druckseite des Lüftersystems angeordnet, wobei dann ersichtlich ist, die Unterdruckabnahme auf der Saugseite des Lüfterrades speziell an die geometrischen Gegebenheiten der zu kühlenden Brennkraftmaschine anzupassen.

Diese und weitere Merkmale von bevorzugten Weiterbildungen der Erfindung gehen außer aus den Ansprüchen auch aus der Beschreibung und der Zeichnung hervor.

### Kurze Beschreibung der Zeichnungen

Weitere Einzelheiten der Erfindung werden in der Zeichnung anhand von schematischen Ausführungsbeispielen beschrieben. Hierbei zeigt:
- Figur 1: eine perspektivische Ansicht eines zweckmäßigen Luftfiltersystems,
- Figur 2: einen Längsschnitt durch ein vollständiges Feststoffpartikelaustrags system,

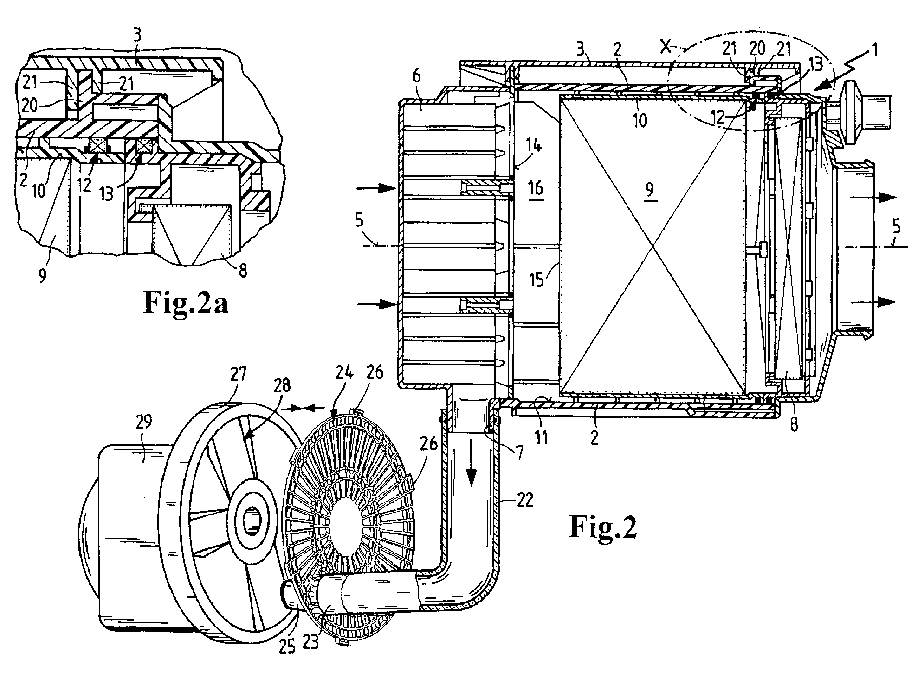

- Figur 2 a: einen vergrößerten Ausschnitt "X" der Figur 2 und

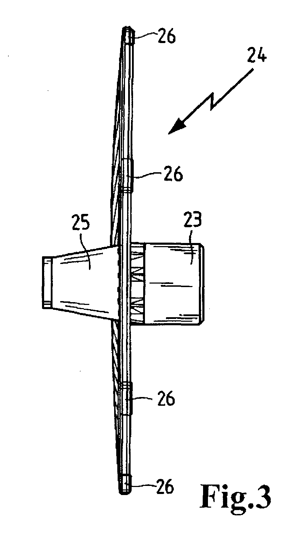

- Figur 3: ein in diesem System verwendetes Lüftungsgitter.

### Ausführungsform(en) der Erfindung

In den Figuren sind gleiche Bauteile mit gleichen Bezugszeichen versehen.

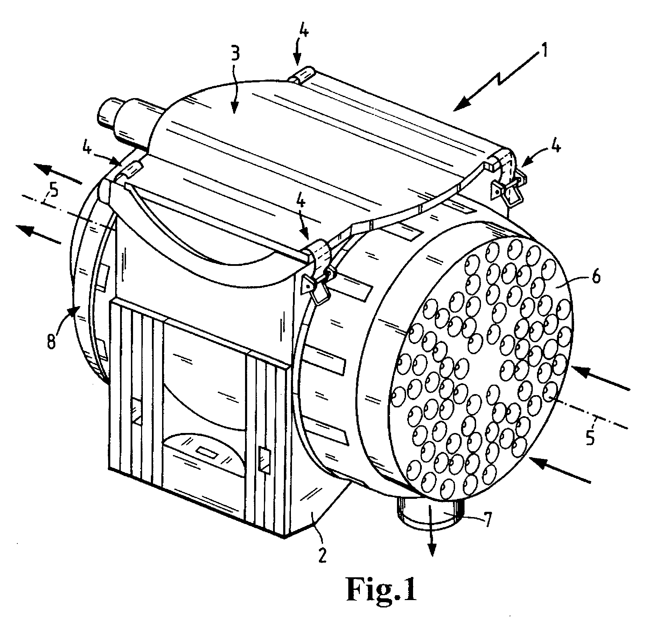

Bei dem in Fig. 1 dargestellten Filter 1 handelt es sich insbesondere um einen Luftfilter, der beispielsweise im Ansaugtrakt einer Brennkraftmaschine angeordnet und den Lufteinlässen des Motors zur Reinigung der Verbrennungsluft vorgeschaltet ist. Der Filter 1 soll hierbei stellvertretend für weitere mögliche Luftfiltersysteme stehen, welche erfindungsgemäß verwendet werden können. Er weist ein Filtergehäuse 2 auf, in welchem das Filterelement aufgenommen ist, sowie einen Gehäusedeckel 3, mit dem ein Aufnahmeraum zur Aufnahme des Filterelementes zu verschließen ist. Der Gehäusedeckel 3 ist über Verschlusselemente 4 fest mit dem Filtergehäuse 2 zu verriegeln. Das Filterelement ist etwa zylindrisch ausgebildet und wird entsprechend den eingetragenen Pfeilen axial in Richtung der Längsachse 5 durchströmt. Die zu reinigende Rohluft wird dem Filter 1 axial an dessen Anströmseite zugeführt, die gereinigte Reinluft verlässt den Filter ebenfalls axial über dessen Abströmseite.

Dem im Filtergehäuse aufgenommenen zentralen Filterelement ist ein als Zyklonvorabscheider 6 ausgeführter Vorfilter vorgeschaltet. Die Rohluft wird dem Zyklonvorabscheider 6 zweckmäßig in einem Luftstrom zugeführt und innerhalb des Zyklons in Rotation versetzt, woraufhin die in der Rohluft enthaltenen Schmutzpartikel durch die Fliehkraft im Zyklonvorabscheider nach außen getragen werden und über eine sich radial nach unten erstreckende Feststoffpartikelaustragöffnung 7 aus dem Vorabscheidergehäuse durch Anlegen eines Unterdruckes entfernt werden können. Des Weiteren ist dem zentralen Filterelement ein Feinfilter 8 nachgeschaltet, welcher benachbart zur Abströmseite des Filters angeordnet ist.

Wie Figur 2 zu entnehmen ist, ist in einem Aufnahmeraum 11 im Filtergehäuse 2 das zentrale Filterelement 9 aufgenommen, welches axial zwischen Zyklonvorabscheider 6 und Feinfilter 8 angeordnet ist. Das Filterelement 9 sitzt in einem Trägergehäuse 10, welches zylindrisch ausgebildet und als separates Bauteil ausgeführt ist. Das Trägergehäuse 10 bildet einen Hohlzylinder, in welchem das Filterelement 9 aufgenommen ist. Das Filterelement 9 kann mit dem Trägergehäuse 10 verklebt sein.

Um die Anström- bzw. Rohluftseite von der Abström- bzw. Reinluftseite zu separieren, ist benachbart zum nachgeschalteten Feinfilter 8 ein auf der Außenseite des Trägergehäuses 10 gehaltener Dichtring 12 vorgesehen, welcher in Einbauposition des Filterelementes 9 die Außenseite des Trägergehäuses 10 mit der Wandung des Aufnahmeraumes 11 abdichtet, so dass Rohluftseite und Reinluftseite des Filters in Axialrichtung strömungsdicht abgeteilt sind. Zur Unterstützung der Dichtwirkung kann ein zweiter Dichtring 13 auf dem Gehäuse des Feinfilters 8 benachbart und parallel zum ersten Dichtring 12 vorgesehen sein. Diese Details sind in Fig. 2a vergrößert als Ausschnitt "X" der Figur 2 dargestellt. Zweckmäßig weisen auch der als Zyklonvorabscheider 6 ausgeführte Vorfilter und der nachgeschaltete Feinfilter 8 jeweils ein eigenes, separat vom Filtergehäuse 2 ausgeführtes Gehäuse auf, welches in Montageposition fest mit dem Filter 1 verbunden ist.

Zwischen der Luftaustrittseite 14 des Zyklonvorabscheiders 6 und der Lufteintrittsseite 15 des zentralen Filterelementes 9 liegt im Aufnahmeraum 11 ein Zwischenraum 16, welcher für eine Axialverschiebung des Filterelementes 9 einschließlich des Trägergehäuses 10 beim Einführen in den Aufnahmeraum 11 und beim Herausnehmen aus dem Aufnahmeraum 11 genutzt werden kann. Die Axialverschiebung geht insbesondere einher mit einer Drehbewegung von Trägergehäuse 10 und Filterelement 9, wodurch ein Bajonettverschluss realisiert werden kann, der sowohl eine translatorische als auch eine rotatorische Bewegung von Filterelement 9 umfasst. Die rotatorische und translatorische Bewegung wird vorteilhaft als zwangsgeführte Bewegung ausgeführt, indem Führungsmittel am Filtergehäuse 2 mit zugeordneten Führungsmitteln am Trägergehäuse 10 zusammenwirken.

Zusätzlich zum Verschließen des Aufnahmeraumes 11 kommt dem Gehäusedeckel 3 eine Verriegelungsfunktion zum formschlüssigen Verriegeln des in dem Aufnahmeraum 11 aufgenommenen Trägergehäuses 10 mit Filterelement 9 zu. Die Verriegelung wird über Verriegelungselemente 20 und 21 am Umfang des Filtergehäuses 2 bzw. auf der Innenseite des Gehäusedeckels 3 realisiert, wobei das erste Verriegelungselement 20 am Filtergehäuse 2 als radial überstehender Flansch ausgeführt ist, der in Verriegelungsposition in das zweite, nutförmig ausgeführte Verriegelungselement 21 auf der Unterseite des Gehäusedeckels 3 hineinragt. Über die Verriegelung ist zweckmäßig sowohl in Achsrichtung als auch in Umfangsrichtung ein Formschluss herzustellen. An der Feststoffpartikelaustragsöffnung 7 ist eine flexible Verbindungsleitung 22 lösbar aufgesteckt, welche zu einem Aufnahmekragen 23 eines Schutzgitters 24 führt. Der Aufnahmekragen 23 ist die zylindrische Verlängerung des sich in Richtung Lüfterrad 28 konisch verjüngenden Rohrstutzens 25. Das Schutzgitter 24 weist mehrere über den Umfang verteilte Verbindungsmittel 26 zur Verbindung mit einer Umrandung 27 des Lüfterrades 28 auf. Das Lüfterrad 28 ist an einer hier nur schematisch dargestellten Brennkraftmaschine 29 befestigt und wird bevorzugt über einen hier nicht dargestellten Riemen- oder Kettentrieb angetrieben.

In der Figur 2 sind das Schutzgitter 24 und die Lüfteranordnung 27, 28 zur besseren Verdeutlichung getrennt voneinander dargestellt. Im Betrieb ist jedoch das Schutzgitter 24 mit dem Lüfterradrahmen 27 in Pfeilrichtung verbunden. Beim Betrieb der Brennkraftmaschine 29 wird also das Lüfterrad 28 bevorzugt über eine mechanische Verbindung angetrieben, wodurch auf der dem Schutzgitter 24 zugewandten Seite ein Unterdruck entsteht, welcher über den konischen Teil des Rohrstutzens 25 für eine Absaugung der Feststoffpartikel aus der Feststoffpartikelaustragsöffnung 7 sorgt.

Die Figur 3 zeigt in einer Seitenansicht das Schutzgitter 24 mit dem Anschlusskragen 23 zur Befestigung der Verbindungsleitung 22, welche zur Feststoffpartikelaustragsöffnung 7 führt. Hier ist deutlich der konische Anteil 25 des Rohrstutzens zu erkennen, welcher in Richtung des Lüfterrades 28 die Verjüngung aufweist. Diese Geometrie führt zu einer deutlichen Verbesserung der Luftströmung und zu einem erhöhten Luftdurchsatz.

## Patentansprüche

1. Brennkraftmaschine, vorzugsweise luftgekühlte Brennkraftmaschine, aufweisend ein Luftfiltersystem mit wenigstens einem Filterelement (9), insbesondere weiterhin aufweisend einen Vorabscheider, wobei das Luftfiltersystem eine Feststoffpartikelaustragsöffnung (7) in Strömungsrichtung vor dem nächsten Filterelement (9) aufweist, und eine Lüfteranordnung, aufweisend einen Halterahmen und ein darin angeordnetes Lüfterrad (28) zur Herstellung eines Kühlluftstromes, wobei die Feststoffpartikelaustragsöffnung (7) korrespondierend mit der Saugseite des Lüfterrades (28) verbunden ist, derart, dass durch den Unterdruck des Lüfterrades (28) die im Luftfiltersystem gesammelten Feststoffpartikel abgesaugt werden, **dadurch gekennzeichnet, dass** die Feststoffpartikelaustragsöffnung (7) in Strömungsrichtung hinter wenigstens einem Zyklonvorabscheider (6) im Luftfiltergehäuse angeordnet ist.

2. Brennkraftmaschine nach Anspruch 1, **dadurch gekennzeichnet, dass** die Saugseite des Lüfterrades (28) mit einem Schutzgitter überdeckt ist, wobei das Schutzgitter einen in das Schutzgitter eingebrachten Rohrstutzen (25) aufweist, welcher sich axial in Richtung des Lüfterrad (28) erstreckt und wobei der Rohrstutzen (25) korrespondierend mit der Feststoffpartikelaustragsöffnung (7) verbunden ist.

3. Brennkraftmaschine nach Anspruch 2, **dadurch gekennzeichnet, dass** der Rohrstutzen (25) wenigstens abschnittsweise eine sich in Richtung des Lüfterrades (28) verjüngende konische Form aufweist.

4. Brennkraftmaschine nach Anspruch 1, **dadurch gekennzeichnet, dass** die Saugseite des Lüfterrades (28) mit einem Schutzgitter überdeckt ist, wobei das Schutzgitter eine im Wesentlichen kreisförmige oder polygonale Öffnung aufweist, wobei die Öffnung korrespondierend mit der Feststoffpartikelaustragsöffnung (7) verbunden ist.

5. Brennkraftmaschine nach Anspruch 1, **dadurch gekennzeichnet, dass** die Saugseite des Lüfterrades (28) mit einem Schutzgitter überdeckt ist, wobei das Schutzgitter eine im Wesentlichen schlitzförmige Öffnung aufweist, wobei die Öffnung korrespondierend mit der Feststoffpartikelaustragsöffnung (7) verbunden ist.

6. Brennkraftmaschine nach einem der vorhergehenden Ansprüche, **dadurch gekennzeichnet, dass** die Feststoffpartikelaustragsöffnung (7) über eine flexible Rohrleitung mit der Saugseite des Lüfterrades (28) verbunden ist.

7. Brennkraftmaschine nach einem der Ansprüche 1 bis 5, **dadurch gekennzeichnet, dass** die Feststoffpartikelaustragsöffnung (7) über eine starre Rohrleitung mit der Saugseite des Lüfterrades verbunden ist.

8. Brennkraftmaschine nach einem der vorhergehenden Ansprüche, **dadurch gekennzeichnet, dass** die Lüfteranordnung auf der Druckseite an der Brennkraftmaschine (29) angeordnet ist, derart, dass die Lüfteranordnung zur Kühlung eines luftgekühlten Motors dient.

## Claims

1. Internal combustion engine, preferably air-cooled internal combustion engine, featuring an air filter system having at least one filter element (9), in particular featuring furthermore a pre-separator, the air filter system featuring a solid particle discharge opening (7) in flow direction upstream of the next filter element (9), and a fan assembly, featuring a supporting frame and a fan impeller (28) disposed therein for realizing a cooling air flow, the solid particle discharge opening (7) being correspondingly connected with the suction side of the fan impeller (28) in such a way that the solid particles accumulated in the air filter system by means of the vacuum of the fan impeller (28) are extracted, **characterized in that** the solid particle discharge opening (7) is disposed in flow direction behind of at least one cyclone precleaner (6) in the air filter housing.

2. Internal combustion engine according to claim 1, **characterized in that** the suction side of the fan impeller (28) is covered with a protective grid, the protective grid featuring a pipe connection (25) integrated in the protective grid which extends axially in the direction of the fan impeller (28), and the pipe connection (25) being correspondingly connected with the solid particle discharge opening (7).

3. Internal combustion engine according to claim 2, **characterized in that** the pipe connection (25) features at least sectionwise a conical shape that tapers in the direction of the fan impeller (28).

4. Internal combustion engine according to claim 1, **characterized in that** the suction side of the fan impeller (28) is covered with a protective grid, the protective grid featuring a substantially circular or polygonal opening, the opening being correspondingly connected with the solid particle discharge opening (7).

5. Internal combustion engine according to claim 1, **characterized in that** the suction side of the fan impeller (28) is covered with a protective grid, the protective grid featuring a substantially slit-shaped opening, the opening being correspondingly connected with the solid particle discharge opening (7).

6. Internal combustion engine according to one of the above claims, characterrized in that the solid particle discharge opening (7) is connected with the suction side of the fan impeller (28) via a flexible piping.

7. Internal combustion engine according to one of the claims 1 to 5, characterrized in that the solid particle discharge opening (7) is connected with the suction side of the fan impeller via a rigid piping.

8. Internal combustion engine according to one of the above claims, characterrized in that the fan assembly is disposed on the pressure side at the internal combustion engine (29) in such a way that the fan assembly serves to cool an air-cooled engine,

## Revendications

1. Moteur à combustion interne, de préférence moteur à combustion interne refroidi à l'air, présentant un système de filtre à air avec au moins un élément filtrant (9), présentant notamment, par ailleurs, un pré-séparateur, le système de filtre à air présentant une ouverture d'évacuation de particules de matières solides (7) dans le sens du flux en amont de l'élément filtrant (9) suivant et un ensemble de ventilateurs présentant un châssis de support et une roue de ventilateur (28) placée à l'intérieur du châssis et destinée à générer un flux d'air de refroidissement, l'ouverture d'évacuation de particules de matières solides (7) étant reliée de façon correspondante au côté aspiration de la roue de ventilateur (28) de manière à ce que, sous l'effet de la dépression de la roue de ventilateur (28), les particules de matières solides collectées dans le système de filtre à air soient aspirées, **caractérisé en ce que** l'ouverture d'évacuation de particules de matières solides (7) est positionnée, dans le sens du flux, derrière au moins un séparateur à cyclone (6) dans le boîtier de filtre à air.

2. Moteur à combustion interne selon la revendication 1, **caractérisé en ce que** le côté aspiration de la roue de ventilateur (28) est recouvert d'une grille de protection, la grille de protection présentant une tubulure (25) insérée dans la grille de protection et s'étendant en sens en direction de la roue de ventilateur (28), et la tubulure (25) étant reliée de façon correspondante à l'ouverture d'évacuation de particules de matières solides (7).

3. Moteur à combustion interne selon la revendication 2, **caractérisé en ce que** la tubulure (25) fait preuve, au moins sur certaines sections, d'une forme conique rétrécissant en direction de la roue de ventilateur (28).

4. Moteur à combustion interne selon la revendication 1, **caractérisé en ce que** le côté aspiration de la roue de ventilateur (28) est recouvert d'une grille de protection, la grille de protection présentant une ouverture essentiellement circulaire ou polygonale, l'ouverture étant reliée de façon correspondante à l'ouverture d'évacuation de particules de matières solides (7).

5. Moteur à combustion interne selon la revendication 1, **caractérisé en ce que** le côté aspiration de la roue de ventilateur (28) est recouverte d'une grille de protection, la grille de protection présentant une ouverture essentiellement en forme de fente, l'ouverture étant reliée de façon correspondante à l'ouverture d'évacuation de particules de matières solides (7).

6. Moteur à combustion interne selon l'une des revendications précédentes, **caractérisé en ce que** l'ouverture d'évacuation de particules de matières solides (7) est reliée par une conduite flexible au côté aspiration de la roue de ventilateur (28).

7. Moteur à combustion interne selon l'une des revendications 1 à 5, **caractérisé en ce que** l'ouverture d'évacuation de particules de matières solides (7) est reliée par une conduite rigide au côté aspiration de la roue de ventilateur.

8. Moteur à combustion interne selon l'une des revendications précédentes, **caractérisé en ce que** l'ensemble de ventilateurs du côté pression est disposé sur le moteur à combustion interne (29) de sorte que l'ensemble de ventilateurs serve au refroidissement d'un moteur refroidi à l'air.
